# EUROPEAN PATENT APPLICATION

(11) **EP 2 267 438 A2**
(43) Date of publication of application: **29.12.2010**
(21) Application number: 10165943.1
(22) Date of filing: 15.06.2010
(51) Int. Cl.: G01N 21/95

(54) **Adhesive sensor for hot melt and liquid adhesives**

(30) Priority: 23.06.2009 US 219738 P; 11.06.2010 US 813762
(71) Applicant: NORDSON CORPORATION, Westlake, OH 44145-1119 (US)
(72) Inventor: Gaon, Martin, MERRICK, NY 11566 (US)
(74) Representative: Eisenführ, Speiser & Partner

(57) **Abstract**

Apparatus and methods for detecting adhesives. The apparatus includes an adhesive sensor (10) having a photodiode (12) sensitive to infrared radiation at different wavelengths. The adhesive sensor may sense infrared radiation (14) thermally emitted from a sufficiently hot adhesive. Alternatively, the adhesive sensor may sense infrared radiation from first (24) and second (26) near infrared diodes that emit at different wavelengths that are reflected with different intensities from an adhesive that is at a temperature insufficient to emit infrared radiation at an intensity to be readily detectable. A visible light source may be provided for targeting and focusing the adhesive sensor.

## Description

### CROSS-REFERENCE TO RELATED APPLICATIONS

This application claims the benefit of U.S. Provisional Application No. 61/219,738, filed June 23, 2009, the disclosure of which is hereby incorporated by reference herein in its entirety.

### FIELD OF THE INVENTION

The invention relates to an apparatus for on-line detection and measurement of liquid adhesives and hot melt adhesives applied to a substrate using the same near infrared detector.

### BACKGROUND

Separate sensors are needed in conventional on-line detection and measurement systems to hot melt adhesives and relatively-cool detect aqueous liquid adhesives after application on a substrate. Conventional sensors for detecting hot melt adhesives tend to have slow detection times, which may limit the ability to detect smaller amounts of applied adhesive. Therefore, there is a need in the art for a single sensor that is capable of detecting both hot melt and liquid adhesives and at higher detection speeds than conventional sensors.

### BRIEF SUMMARY OF THE INVENTION

In one embodiment, an apparatus is provided for detecting a first adhesive. The apparatus includes first and second radiation sources configured to direct near-infrared radiation at respective first and second wavelengths toward an amount of the first adhesive on a substrate. The apparatus further includes an adhesive sensor configured to sense the near-infrared radiation at the first and second wavelengths. The adhesive sensor is further configured to collect portions of the near-infrared radiation that are reflected from the amount of the first adhesive on the substrate and to generate respective first and second signals.

In one embodiment, the adhesive sensor may include a photodiode configured to detect near-infrared radiation thermally emitted from a second adhesive on the substrate without the use of the first and second radiation sources. In another embodiment, the first and second radiation sources may be near infrared photodiodes configured to emit radiation in the near-infrared band of the electromagnetic spectrum. In yet another embodiment, the apparatus may also include a visible light source configured for use in targeting and focusing the adhesive sensor.

In a specific embodiment, the first wavelength may be about 1,260 nm and the second wavelength may be about 1,440 nm. In another specific embodiment, the first and second wavelengths are selected within the near-infrared band of the electromagnetic spectrum such that the first adhesive has different reflection coefficients at the first and second wavelengths.

In one embodiment, the first and second radiation sources are near infrared photodiodes configured to emit radiation in the near-infrared band of the electromagnetic spectrum, and the apparatus further includes a microprocessor configured to receive signals from the adhesive sensor and to drive the first and second near infrared photodiodes. The microprocessor may be further configured to determine presence or absence of the adhesive on the substrate based upon a comparison of the portion of the near-infrared radiation at the first wavelength collected by the adhesive sensor and the portion of the near-infrared radiation at the second wavelength collected by the adhesive sensor. The adhesive sensor may include a photodiode configured to detect near-infrared radiation at the first and second wavelengths, and the apparatus may further include a signal output electrically connecting the microprocessor with a verification system, an amplifier electrically connected with the photodiode, and an analog to digital converter electrically connecting the amplifier with the microprocessor, wherein the amplifier is configured to amplify signals produced by the photodiode in response to collecting and sensing the first and second portions of the near-infrared radiation at the first and second wavelengths, and the analog to digital converter is configured to convert the amplified signals from the photodiode to digital signals supplied to the microprocessor.

In another embodiment, the adhesive sensor is configured to collect and sense the near-infrared radiation at the first and second wavelengths without the use of a fiber optic element.

In an embodiment, a method is provided for sensing first and second adhesives applied to a substrate. The method includes sensing near-infrared radiation thermally emitted from the first adhesive and sensing near-infrared radiation at a first wavelength reflected from the second adhesive.

In one embodiment, the near-infrared radiation at the first wavelength reflected from the second adhesive may be sensed by irradiating the second adhesive with the near-infrared radiation at the first wavelength and collecting a portion of the near-infrared radiation at the first wavelength that is reflected from the second adhesive. The method may further include collecting a portion of near-infrared radiation at a second wavelength that is reflected from the second adhesive and comparing the portion of the near-infrared radiation at the first wavelength with the portion of the near-infrared radiation at the second wavelength to determine the presence or absence of the second adhesive on the substrate. The presence or absence of the second adhesive on the substrate may be communicated to a verification system. The adhesive may be sequentially illuminated with the near-infrared radiation at the first and second wavelengths. In specific embodiments, the first and second wavelengths may be about 1,260 nm and about 1,440 nm, respectively, or the first and second wavelengths may be selected within the near-infrared band of the electromagnetic spectrum such that the first adhesive has different reflection coefficients at the first and second wavelengths.

In another embodiment, the first and second adhesives are applied to the substrate at different temperatures and the first adhesive is hotter at the time of application than the second adhesive.

In yet another embodiment, the near-infrared radiation is sensed by a photodiode of an adhesive sensor, and the method further includes targeting and focusing the adhesive sensor with visible light originating from a visible light source.

In another embodiment, the near-infrared radiation is collected and sensed to practice the method without the use of a fiber optic element.

### BRIEF DESCRIPTION OF THE SEVERAL VIEWS OF THE DRAWINGS

The accompanying drawings, which are incorporated in and constitute a part of this specification, illustrate embodiments of the invention and, together with a general description of the invention given above, and the detailed description given below, serve to explain the invention.

FIG. 1 is a diagrammatic representation of an adhesive sensor consistent with embodiments of the invention.

FIG. 2 is a diagrammatic representation of the adhesive sensor of FIG. 1 detecting a hot melt adhesive.

FIG. 3 is a flowchart of the process for detecting the hot melt adhesive in FIG. 2

FIG. 4 is a diagrammatic representation of the adhesive sensor of FIG. 1 detecting an aqueous liquid adhesive.

FIG. 5 is a flowchart of the process for detecting the aqueous liquid adhesive in FIG. 4.

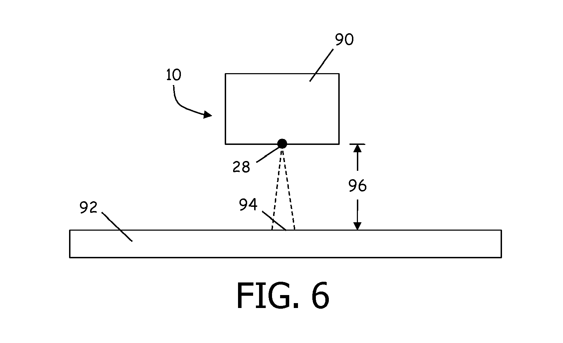

FIG. 6 is a diagrammatic representation of the adhesive sensor being positioned for use.

It should be understood that the appended drawings are not necessarily to scale, presenting a somewhat simplified representation of various features illustrative of the basic principles of the invention. The specific design features of the sequence of operations as disclosed herein, including, for example, specific dimensions, orientations, locations, and shapes of various illustrated components, will be determined in part by the particular intended application and use environment. Certain features of the illustrated embodiments have been enlarged or distorted relative to others to facilitate visualization and clear understanding. In particular, thin features may be thickened, for example, for clarity or illustration.

### DETAILED DESCRIPTION OF THE INVENTION

Generally, a single near infrared detector sensitive to infrared radiation at different wavelengths may be used in an adhesive sensor to detect both hot melt and liquid adhesives. The adhesive sensor may sense infrared radiation thermally emitted from a hot melt adhesive. Alternatively, the adhesive sensor may sense infrared radiation from first and second near infrared diodes that emit at different wavelengths that are reflected with different intensities from an adhesive that is at a temperature insufficient to emit infrared radiation at an intensity to be readily detectable. In addition to being able to detect both hot melt and liquid adhesives, the detection methodology detailed below may also provide an increase in detection speed in the sensor (from tens of milliseconds in contemporary sensors to hundreds of microseconds for embodiments of the invention). The increased response time may allow for inspections of smaller targets (dots or breaks in beads) at considerably higher speed. In additional, visible illumination may be added for targeting of the applied material.

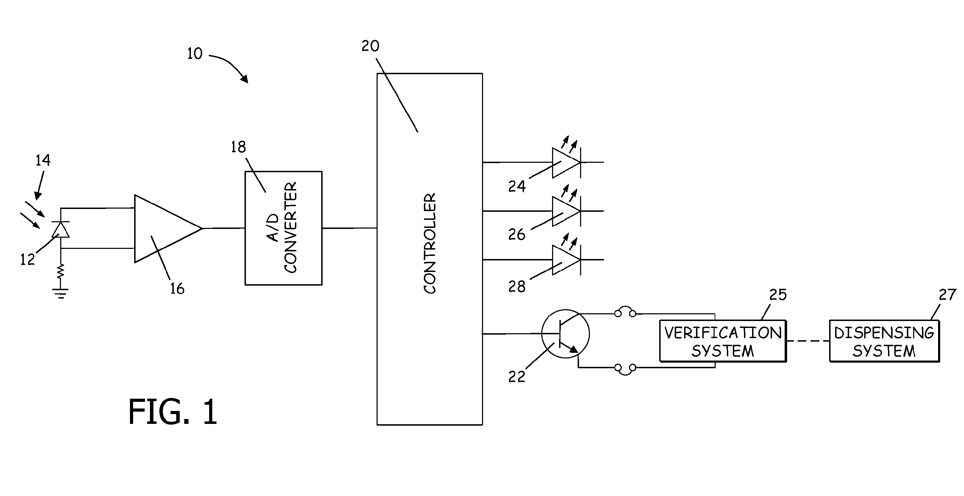

As seen in the diagrammatic representation of adhesive sensor 10 in FIG. 1, a single photodiode, such as a near infrared (NIR) detector 12, may be used to detect thermal or infrared energy 14 emanating from or emitted by a source of hot melt adhesive or infrared energy 14 being reflected off of a substrate or liquid adhesive on the substrate. To detect infrared energy 14, incident infrared energy 14 is focused on the detector 12 via collection optics. The collection optics may consist of a lens assembly configured to collect and focus incident near infrared radiation onto the detector 12. The detector 12 converts the thermal energy contained in the infrared radiation into a current, which has a magnitude proportional to the temperature of the source of the infrared radiation. The conversion process in the detector 12 is understood by a person having ordinary skill in the art.

In one embodiment, the detector 12 is an Indium Gallium Arsenide (InGaAs) photodiode configured to operate in a near-infrared spectral range of 0.7 µm to 2.6 µm. As appreciated by a person having ordinary skill in the art, an InGaAs photodiode include an active semiconductor layer composed of indium, gallium, and arsenic with a composition and construction that reacts to reacts to NIR radiation by generating electron-hole pairs along the photon tracks through the detector 12.

The energy detected is then amplified by an amplifier 16, converted to digital by an A/D converter 18 and supplied to a controller in the representative form of a microprocessor 20. The amplifier 16 is electrically connected to the photodiode to amplify signals produced by the detector 12. The A/D converter 18 is electrically connected to the amplifier 16 and converts the amplified signals to digital signals. The microprocessor 20 is configured to receive the digital signals representing the measured values from the detector 12, and to use an appropriate algorithm to determine the presence of adhesive dispensed onto the substrate. Depending on the type of adhesive being sensed, the microprocessor 20 manipulates the detected energy and compares that value to a threshold value. If the detected infrared energy 14 exceeds the threshold value, then a signal indicating the presence of an adhesive is transmitted through a transistor 22, which is electrically connected to the microprocessor 20, to a verification system 25 for further processing. The verification system 25 monitors the placement of the adhesive on the substrate and can generate an action, such as an alarm, an alarm signal, or display an alarm, if the placement of the adhesive is improper. If the detected energy is below a threshold value, then no signal is transmitted. One of ordinary skill in the art will realize that other electrical components may also be used to transmit an indication of an adhesive signal, including digital logic components, etc.

In one embodiment, the verification system 25 may optionally communicate an indication of the presence or absence of adhesive to a dispensing system 27. This permits closed loop application of the adhesive by the dispensing system 27 in coordination with feedback from the verification system 25 monitoring the measurements output from adhesive sensor 10. The verification and dispensing systems 25, 27 may be integrated into an integrated pattern control and verification system.

When detecting an aqueous liquid adhesive, the microprocessor 20 selectively illuminates near infrared ("NIR") radiation sources, such as light emitting diodes (LEDs), each producing photons with energies at different discrete frequencies or wavelengths within the IR wavelength band of the electromagnetic spectrum. For example, the microprocessor 20 may illuminate a first NIR radiation source 24, which may be set to emit or transmit infrared energy 14 at a wavelength not absorbed by the substrate or the adhesive (approximately 1,260 nm, for example). Additionally, the microprocessor 20 may illuminate a second NIR radiation source 26, which may be set to emit or transmit infrared energy 14 at a wavelength that is at least partially absorbed by the adhesive material (approximately 1,440 nm, for example) and reflected. The microprocessor 20 drives the first and second NIR radiation sources 24, 26, if needed to detect the adhesive.

The adhesive sensor 10 may also use an additional light source 28, such as a visible LED, in order to target and focus the adhesive sensor 10 with the adhesive application. Light source 28 emits light within the visible wavelength band of the electromagnetic spectrum, which has a shorter wavelength than the NIR emitted from the NIR radiation sources 24, 26. Visible light from the light source 28, which is within the response of the human eye, may be used to both align the adhesive sensor 10 with the target adhesive track, as well as to adjust the height of the detector 12 for optimum detection and speed.

The adhesive sensor 10 may be integrated into any of the GD200 family of devices that are commercially available from Nordson Corporation (Westlake, Ohio) in order to provide the dual capability of detecting hot melt adhesives in addition to detecting liquid adhesives. Liquid adhesives, which may be aqueous, are typically at or near room temperature and, in any event, emit significantly less infrared radiation than hot melt adhesives. The liquid adhesives can be detected using the adhesive sensor 10 in conjunction with the NIR radiation sources 24, 26 to provide supplemental infrared illumination.

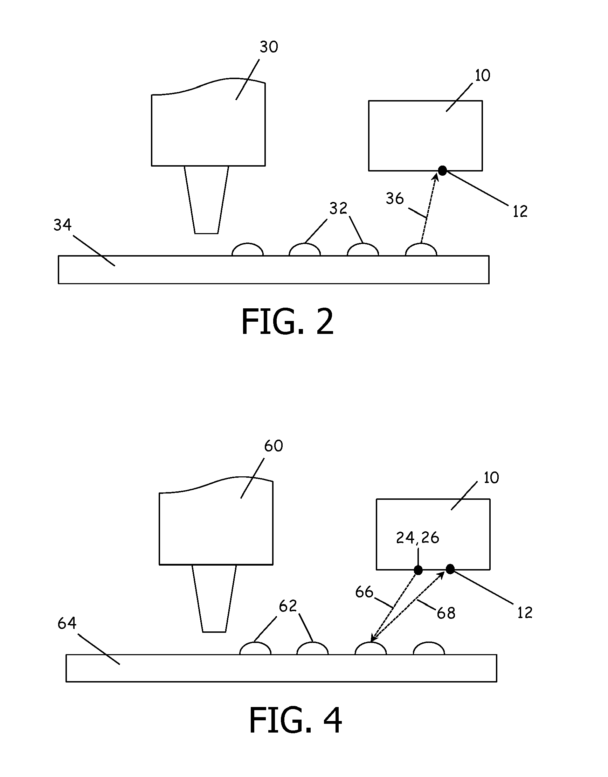

Providing additional detail to the detection of hot melt adhesives, and referring to FIG. 2, a dispenser 30 may deposit dots or beads of a hot melt adhesive 32 onto a substrate 34. The adhesive sensor 10 is positioned and oriented such that the hot melt adhesive 32 deposited on the substrate 34 is within the field of view of the adhesive sensor 10. Infrared radiation 36 emanating from the hot melt adhesive 32 as emitted thermal energy may be detected by the detector 12 of adhesive sensor 10 as the substrate 34 passes by the dispenser 30 and adhesive sensor 10. The separation of the detector 12 from the substrate 34 is selected to lie within the detection range of the detector 12.

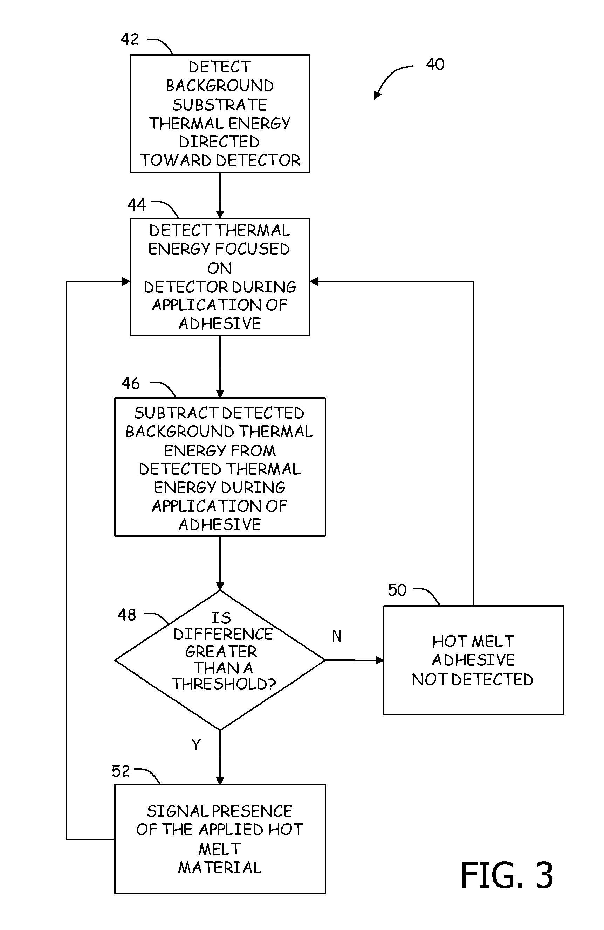

FIG. 3 is a flowchart 40 detailing the detection process consistent with an embodiment of the invention. In order to determine a baseline for measurement, the thermal energy associated with the background and substrate 34 is detected by the detector 12 (block 42). Once the baseline has been determined and the application of adhesive has started, the detector 12 detects the thermal energy resulting from the application of the hot melt adhesive 32 (block 44). The microprocessor 20 uses the baseline thermal energy and the thermal energy detected during the application of the adhesive to determine a change in temperature (block 46). If this change in temperature is less than a threshold value ("No" branch of decision block 48), then no hot melt adhesive 32 is detected (block 50) and the process continues at block 44 by detecting new infrared energy 14 4 from the application of the adhesive. If, however, the change in temperature is greater than the threshold ("Yes" branch of decision block 48), then a signal is transmitted indicating the presence of hot melt material (block 52). After the transmission of the signal, the process continues at block 44. Use of the detector 12 to detect the presence of hot melt adhesive 32 decreases the response time resulting from contemporary thermopiles, allowing for the detection of smaller dots and beads of hot melt adhesive 32 as set forth above and for faster processing speeds.

The process for detecting liquid adhesives is similar to that disclosed in commonly-owned U.S. Patent No. 6,281,500 to Gaon, filed December 17, 1998 and issued August 28, 2001, which is incorporated by reference herein in its entirety. Embodiments of the adhesive sensor 10 improve upon this methodology by being able to eliminate the optical fiber transmission system common to conventional sensor architectures, to utilize NIR LEDs, and to only require the use of one detector, namely detector 12.

As seen in FIG. 4, similar to the hot melt adhesive dispensing above, a dispenser 60 may deposit dots or beads of a liquid adhesive 62 onto a substrate 64. The adhesive sensor 10 may then alternately direct infrared energy 66 from the two NIR LEDs 24, 26 and measure the reflected energy 68 at each wavelength with the detector 12 to determine if liquid adhesive 62 is present.

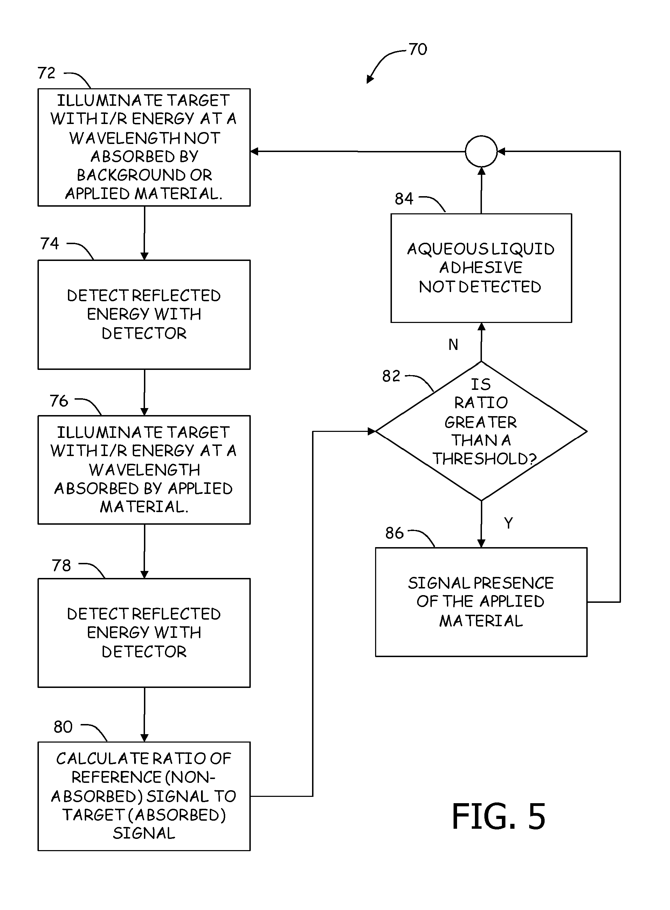

FIG. 5 is a flowchart 70 detailing the process of detecting a liquid adhesive 62 according to an embodiment of the invention. The microprocessor 20 illuminates a target area with infrared radiation or energy 14 from NIR radiation source 24 at a near infrared wavelength that is not significantly absorbed by either the background or the adhesive (block 72). The reflected energy is collected and detected as a baseline signal or value (block 74), and is stored for later processing. Next in block 76, the microprocessor 20 causes the target area to be illuminated with infrared radiation or energy 14 from NIR radiation source 26 at a near infrared wavelength that is at least partially absorbed by the applied material (i.e., an amount of the liquid adhesive 62). A portion of this energy is also at least partially reflected back toward the sensor 10 for collection and detection as a targeted signal or value (block 78).

Once the microprocessor 20 has determined, using an appropriate algorithm, both the baseline and the targeted signals, a ratio of the first reference signal (baseline) to the second reference signal (target signal) is calculated for a comparison of the degree of reflection at the two different wavelengths (block 80). If ratio does not exceed a threshold value ("No" branch of decision block 82), liquid adhesive 62 was not detected (block 84) and the process continues at block 72. If the ratio does exceed a threshold, similar to that in U.S. Patent No. 6,281,500, incorporated by reference above, then a signal is generated in response indicating that liquid adhesive 62 has been detected (block 86). The process then continues at block 72.

The sensor configuration in FIG. 1 and utilized in FIGS. 4-5 provide an improvement over contemporary liquid adhesive sensors, by providing a fiberless sensor having a single detector resulting in a lower cost solution for a manufacturer. The difference in reflection at the two different near infrared wavelengths permit a comparison that can determine the presence or non-presence of liquid adhesive 62.

The visible light source 28 (FIG. 1) of the adhesive sensor 10 may include lasers, or visible LEDs that can be focused and/or lensed. The light source 28 is used to target and focus the head 90 of adhesive sensor 10. As the adhesive sensor 10 is positioned from infinity towards the substrate 92, a visible circular spot 94 is imaged. At the focal distance 96 of the desired lens (about 25 mm for example), the circular spot 94 is illuminated as a sharply imaged visible circle. Moving farther or closer away from the focal point causes the spot 94 to blur. This aid may be used to align the adhesive sensor 10 with applied materials and fixture the sensor head 90 at the proper height over the target and substrate 92. One of ordinary skill in the art will appreciate that there are other methods for determining proper height. Other light sources or output light patterns may be used for determining the proper height. For example, two lasers may be employed and the convergence of the laser outputs may indicate the proper height. Outputs of line patterns rather than circles may also be used. When the line patterns converge, the proper height may be indicated.
Apparatus and methods for detecting adhesives. The apparatus includes an adhesive sensor having a photodiode sensitive to infrared radiation at different wavelengths. The adhesive sensor may sense infrared radiation thermally emitted from a sufficiently hot adhesive. Alternatively, the adhesive sensor may sense infrared radiation from first and second near infrared diodes that emit at different wavelengths that are reflected with different intensities from an adhesive that is at a temperature insufficient to emit infrared radiation at an intensity to be readily detectable. A visible light source may be provided for targeting and focusing the adhesive sensor.

While the present invention has been illustrated by a description of one or more embodiments thereof and while these embodiments have been described in considerable detail, they are not intended to restrict or in any way limit the scope of the appended claims to such detail. For example, the adhesive sensor 10 has been illustrated in embodiments including only hot melt adhesives or only liquid adhesives. Other embodiments of the invention may include adhesive lines that apply both a hot melt as well as a liquid adhesive and the adhesive sensor 10 will be able to detect either the hot melt adhesive, liquid adhesive, or both, eliminating the need to have multiple sensors within the dispenser. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the general inventive concept.

## Claims

1. An apparatus for detecting a first adhesive, the apparatus comprising:
a first radiation source configured to direct near-infrared radiation at a first wavelength toward an amount of the first adhesive on a substrate;
a second radiation source configured to direct near-infrared radiation at a second wavelength toward the amount of the first adhesive on the substrate; and
an adhesive sensor configured to sense the near-infrared radiation at the first and second wavelengths, the adhesive sensor further configured to collect a portion of the near-infrared radiation that is reflected from the amount of the first adhesive on the substrate and to generate a first signal, and the adhesive sensor further configured to collect a portion of the near-infrared radiation at the second wavelength that is reflected from the amount of the first adhesive on the substrate.

2. The apparatus of claim 1 wherein the adhesive sensor includes a photodiode configured to detect near-infrared radiation thermally emitted from a second adhesive on the substrate without the use of the first and second radiation sources.

3. The apparatus of claim 1 wherein the first and second radiation sources are near infrared photodiodes configured to emit radiation in the near-infrared band of the electromagnetic spectrum.

4. The apparatus of claim 1 wherein the first wavelength is about 1,260 nm and the second wavelength is about 1,440 nm.

5. The apparatus of claim 1 wherein the first and second wavelengths are selected within the near-infrared band of the electromagnetic spectrum such that the first adhesive has different reflection coefficients at the first and second wavelengths.

6. The apparatus of claim 1 wherein the first and second radiation sources are near infrared photodiodes configured to emit radiation in the near-infrared band of the electromagnetic spectrum, and further comprising:
a microprocessor configured to receive signals from the adhesive sensor and to drive the first and second near infrared photodiodes.

7. The apparatus of claim 6 wherein the microprocessor is further configured to determine presence or absence of the adhesive on the substrate based upon a comparison of the portion of the near-infrared radiation at the first wavelength collected by the adhesive sensor and the portion of the near-infrared radiation at the second wavelength collected by the adhesive sensor.

8. The apparatus of claim 6 wherein the adhesive sensor includes a photodiode configured to detect near-infrared radiation at the first and second wavelengths, and further comprising:
a signal output electrically connecting the microprocessor with a verification system;
an amplifier electrically connected with the photodiode, the amplifier configured to amplify signals produced by the photodiode in response to collecting and sensing the first and second portions of the near-infrared radiation at the first and second wavelengths; and
an analog to digital converter electrically connecting the amplifier with the microprocessor, the analog to digital converter configured to convert the amplified signals from the photodiode to digital signals supplied to the microprocessor.

9. The apparatus of claim 1 wherein the adhesive sensor is configured to collect and sense the near-infrared radiation at the first and second wavelengths without the use of a fiber optic element.

10. The apparatus of claim 1 further comprising:
a visible light source configured for use in targeting and focusing the adhesive sensor.

11. A method of sensing first and second adhesives applied to a substrate, the method comprising:
sensing near-infrared radiation thermally emitted from the first adhesive; and
sensing near-infrared radiation at a first wavelength reflected from the second adhesive.

12. The method of claim 11 wherein sensing the near-infrared radiation at the first wavelength reflected from the second adhesive comprises:
irradiating the second adhesive with the near-infrared radiation at the first wavelength; and
collecting a portion of the near-infrared radiation at the first wavelength that is reflected from the second adhesive.

13. The method of claim 12 further comprising:
collecting a portion of near-infrared radiation at a second wavelength that is reflected from the second adhesive; and
comparing the portion of the near-infrared radiation at the first wavelength with the portion of the near-infrared radiation at the second wavelength to determine the presence or absence of the second adhesive on the substrate.

14. The method of claim 13 wherein the first wavelength is about 1,260 nm and the second wavelength is about 1,440 nm.

15. The method of claim 13 wherein the first and second wavelengths are selected within the near-infrared band of the electromagnetic spectrum such that the first adhesive has different reflection coefficients at the first and second wavelengths.

16. The method of claim 13 wherein the adhesive is sequentially illuminated with the near-infrared radiation at the first wavelength and the near-infrared radiation at the second wavelength.

17. The method of claim 13 further comprising:
communicating the presence or absence of the second adhesive on the substrate to a verification system.

18. The method of claim 11 wherein the first and second adhesives are applied to the substrate at different temperatures and the first adhesive is hotter at the time of application than the second adhesive.

19. The method of claim 11 wherein the near-infrared radiation is sensed by a photodiode of an adhesive sensor, and further comprising:
targeting and focusing the adhesive sensor with visible light originating from a visible light source.

20. The method of claim 11 wherein the near-infrared radiation is collected and sensed without the use of a fiber optic element.
